(19) **Europäisches Patentamt**
**European Patent Office**
**Office européen des brevets**

(11) **EP 4 733 266 A1**

(12) **EUROPEAN PATENT APPLICATION**

(43) Date of publication:
29.04.2026 Bulletin 2026/18

(21) Application number: 25194894.9

(22) Date of filing: 08.08.2025

(51) International Patent Classification (IPC):
**C01G 53/506** (2025.01)   **H01M 4/525** (2010.01)
**H01M 10/0525** (2010.01)

(52) Cooperative Patent Classification (CPC):
**H01M 4/525; C01G 53/506; H01M 4/131;**
**H01M 10/0525;** C01P 2002/54; C01P 2004/03;
C01P 2004/50; C01P 2004/54; C01P 2004/61;
C01P 2006/40; H01M 2004/021; H01M 2004/028;
Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority:  12.08.2024  KR 20240107774

(71) Applicant: SAMSUNG SDI CO., LTD.
Yongin-si, Gyeonggi-do 17084 (KR)

(72) Inventors:
• **KIM, Seon Hye**
  **17084 Yongin-si (KR)**
• **KIM, Sujin**
  **17084 Yongin-si (KR)**
• **KANG, Minkyeong**
  **17084 Yongin-si (KR)**
• **YI, Seungbeob**
  **17084 Yongin-si (KR)**
• **KIM, Jongmin**
  **17084 Yongin-si (KR)**

(74) Representative: **Marks & Clerk LLP**
**15 Fetter Lane**
**London EC4A 1BW (GB)**

(54) **POSITIVE ELECTRODE ACTIVE MATERIAL, PREPARATION METHOD THEREOF, POSITIVE ELECTRODE, AND RECHARGEABLE LITHIUM BATTERIES**

(57)    A positive electrode active material, a preparation method thereof, a positive electrode including the same, and a rechargeable lithium battery are disclosed. The positive electrode active material includes a positive electrode active material including a lithium nickel-based composite oxide and having a secondary particle form in which a plurality of primary particles are agglomerated, wherein an average size of the primary particles measured through electron backscatter diffraction (EBSD) analysis of a cross-section of the secondary particles is about 1.05 $\mu$m to about 1.5 $\mu$m, a standard deviation of the size of the primary particles is less than or equal to about 0.3 $\mu$m, and an average aspect ratio of the primary particles is less than or equal to about 1.7.

FIG. 7

**Description**

**BACKGROUND**

**1. Field**

According to one or more embodiments, the present disclosure relates to positive electrode active materials, preparation methods thereof, positive electrodes including the same, and rechargeable lithium batteries.

**2. Description of the Related Art**

Rechargeable lithium batteries are widely used as a driving power source for mobile information terminals such as smart phones and laptops because they are highly portable and provide high energy density. Recently, rechargeable lithium batteries with relatively high capacity, long cycle-life, and high output have been actively studied for use as power sources for hybrid or electric vehicles, or as power storage power sources.

Lithium nickel-based composite oxides utilized as positive electrode active materials may provide the desired high capacity. The lithium nickel-based composite oxides may be polycrystals in which a plurality of primary particles gather to form secondary particles. Although smaller primary particles may provide improved charge/discharge efficiency, output characteristics, and/or the like, they have a larger amount of surface area available to undesired reaction(s) with an electrolyte, which may deteriorate stability or cycle-life.

In order to meet the desire or requirement, efforts to apply coated particles or single crystals having enlarged particle sizes and/or the like have been investigated in industrial applications. However, these approaches limit the extent to which high output can be improved.

Accordingly, positive electrode active materials including the lithium nickel-based composite oxides but still accomplishing high capacity, long cycle-life, and high output are desired or required.

**SUMMARY**

One or more aspects are directed toward a positive electrode active material capable of providing (securing) high capacity, long cycle-life, and high output.

Additional aspects will be set forth in part in the description which follows and, in part, will be apparent from the description, or may be learned by practice of the presented embodiments of the disclosure.

According to one or more embodiments, a positive electrode active material includes secondary particles including a lithium nickel-based composite oxide, and having a secondary particle form in which a plurality of primary particles are agglomerated, wherein an average size of the primary particles is measured through electron backscatter diffraction (EBSD) analysis of a cross-section of the secondary particles, and is in a range of about 1.05 micrometer ($\mu$m) to about 1.5 $\mu$m, a standard deviation of the average size of the primary particles is less than or equal to about 0.3 $\mu$m, and an average aspect ratio of the primary particles is less than or equal to about 1.7.

According to one or more embodiments, a method for preparing a positive electrode active material includes: mixing a nickel-based composite oxide and a lithium raw material (to provide a mixture); and performing a heat-treatment (to the mixture) to obtain the positive electrode active material described herein.

According to one or more embodiments, a positive electrode includes a positive electrode current collector, a positive electrode active material layer on the positive electrode current collector, wherein the positive electrode active material layer includes the aforementioned positive electrode active material.

According to one or more embodiments, a rechargeable lithium battery includes the aforementioned positive electrode, a negative electrode, and an electrolyte.

At least some of the above and other features of the invention are set out in the claims.

According to some example embodiments, the positive electrode active material may be advantageous in providing (securing) high capacity, long cycle-life, and high output.

**BRIEF DESCRIPTION OF THE DRAWINGS**

The accompanying drawings are included to provide a further understanding of the present disclosure and are incorporated in and constitute a part of this specification. The drawings illustrate embodiments of the present disclosure and, together with the description, serve to explain principles of the present disclosure.

FIGS. 1-4 are schematic views illustrating rechargeable lithium batteries according to some example embodiments.
FIG. 5 is a scanning electron microscope (SEM) photograph of a cross-section of the positive electrode active material prepared in the Example.

FIG. 6 is a scanning electron microscope (SEM) photograph of a cross-section of the positive electrode active material prepared in the Comparative Example.

FIG. 7 is an electron backscatter diffraction (EBSD) image of a cross-section of the positive electrode active material prepared in the Example.

FIG. 8 is an electron backscatter diffraction (EBSD) image of a cross-section of the positive electrode active material prepared in the Comparative Example.

FIG. 9 is a curve showing the aspect ratio distribution of primary particles in the cross-section of the positive electrode active material prepared in the Example.

FIG. 10 is a curve showing the aspect ratio distribution of primary particles in the cross-section of the positive electrode active material prepared in the Comparative Example.

FIG. 11 is a combined graph of FIGS. 9 and 10.

FIG. 12 is a graph analyzed through the aspect ratio distribution curves of the primary particles of FIGS. 9 and 10.

FIG. 13 is a graph showing the high-rate characteristic evaluation of rechargeable lithium battery cells manufactured in Example and Comparative Example.


## DETAILED DESCRIPTION

Hereinafter, specific embodiments of the present disclosure will be described in detail to such an extent so that those of ordinary skill in the art can easily implement them. In order to sufficiently understand the configuration and effect of the present disclosure, one or more embodiments are described with reference to the accompanying drawings. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" refers to a mixture, a laminate, a composite, a copolymer, an alloy, a blend, a reaction product, and the like of the constituents.

Here, it should be understood that terms such as "comprises," "includes," "comprising," "including," "having," "comprise, " "include," and/or "have," are intended to designate the presence of an embodied feature, number, step, element, or a combination thereof, but it does not preclude the possibility of the presence or addition of one or more other features, numbers, steps, elements, or a combination thereof.

In the drawings, the thickness of layers, films, panels, regions, and/or the like, are exaggerated for clarity and like reference numerals designate like elements throughout the specification. It will be understood that when an element such as a layer, film, region, or substrate is referred to as being " on " another element, it can be directly on the other element or intervening elements may also be present. In contrast, when an element is referred to as being "directly on" another element, there are no intervening elements present.

In some embodiments, "layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter may refer to the diameter (D50) of particles having a cumulative volume of 50 volume% in the particle size distribution. As used herein, when a definition is not otherwise provided, the average particle diameter refers to a diameter ($D_{50}$) of particles having a cumulative volume of 50 volume% in the particle size distribution that is obtained by measuring the size (diameter or major axis length) of about 20 particles at random in a scanning electron microscope image.

Here, "or" is not to be construed as an exclusive meaning, for example, "A or B" is construed to include A, B, A+B, and the like.

"Metal" is interpreted as a concept including ordinary metals, transition metals and metalloids (semi-metals).

It will be understood that, although the terms "first," "second," "third," and/or the like may be utilized herein to describe one or more suitable elements, components, regions, layers and/or sections, these elements, components, regions, layers and/or sections should not be limited by these terms. These terms are only utilized to distinguish one element, component, region, layer or section from another element, component, region, layer, or section. Thus, a first element, component, region, layer, or section described herein may be termed a second element, component, region, layer or section without departing from the teachings set forth herein.

As utilized herein, the term "and/or" includes any, and all, combinations of one or more of the associated listed items. Expressions such as "at least one of," "one of," and "selected from," if (e.g., when) preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

Spatially relative terms, such as "beneath," "below," "lower," "above," "upper" and/or the like, may be utilized herein to easily describe the relationship between one element or feature and another element or feature. It will be understood that the spatially relative terms are intended to encompass different orientations of a device in utilization or operation in addition to the orientation illustrated in the drawings. For example, if (e.g., when) the device in the drawings is turned over, elements described as "below" or "beneath" other elements or features will be oriented "above" the other elements or features. Thus, the example term "below" can encompass both (e.g., simultaneously) the orientations of above and below. The device may be otherwise oriented (rotated 90 degrees or at other orientations), and the spatially relative terms utilized herein may be interpreted accordingly.

The terminology utilized herein is utilized for the purpose of describing the embodiments, and is not intended to limit the present disclosure. Unless otherwise defined, all terms (including chemical, technical and scientific terms) utilized herein have the same meaning as commonly understood by one of ordinary skill in the art to which this disclosure pertains. It will be further understood that terms, such as those defined in commonly utilized dictionaries, should be interpreted as having a meaning that is consistent with their meaning in the context of the related art and the present disclosure, and will not be interpreted in an idealized or overly formal sense.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

**Positive Electrode Active Material**

In one or more embodiments, a positive electrode active material includes secondary particles including a lithium nickel-based composite oxide, the secondary particles having a form (e.g., a secondary particle form) in which a plurality of primary particles are agglomerated, wherein an average size of the primary particles measured through electron backscatter diffraction (EBSD) analysis of a cross-section of the secondary particles is in a range of about 1.05 micrometer ($\mu$m) to about 1.5 $\mu$m, a standard deviation of the average size of the primary particles is less than or equal to about 0.3 $\mu$m, and an average aspect ratio of the primary particles is less than or equal to about 1.7.

The lithium nickel-based composite oxide may be represented by Chemical Formula 1.

**Chemical Formula 1**    $Li_{a1}Ni_{x1}M^1_{y1}M^2_{z1}O_{2-b1}X_{b1}$

In Chemical Formula 1, $0.9 \leq a1 \leq 1.2$, $0.8 \leq x1 < 1$, $0 < y1 \leq 0.2$, $0 \leq z1 \leq 0.2$, $0.9 \leq x1+y1+z1 \leq 1.1$, and $0 \leq b1 \leq 0.1$, $M^1$ and $M^2$ may each independently be at least one (e.g., one or more) element(s) selected from among Al, B, Ba, Ca, Ce, Co, Cr, Cu, Fe, Mg, Mn, Mo, Nb, Si, Sn, Sr, Ti, V, W, Zn, Y, and Zr, and X may be at least one (e.g., one or more) element(s) selected from among F, P, and S.

In one or more embodiments of Chemical Formula 1, $0.85 \leq x1 < 1$, $0 < y1 \leq 0.15$, and $0 \leq z1 \leq 0.15$.

The lithium nickel-based composite oxide may be, for example, represented by Chemical Formula 2 or Chemical Formula 3.

**Chemical Formula 2**    $Li_{a2}Ni_{x2}Co_{y2}M^3_{z2}O_{2-b2}X_{b2}$

In Chemical Formula 2, $0.9 \leq a2 \leq 1.2$, $0.8 \leq x2 < 1$, $0 < y2 \leq 0.2$, $0 \leq z2 \leq 0.2$, $0.9 \leq x2+y2+z2 \leq 1.1$, and $0 \leq b2 \leq 0.1$ $M^3$ may be at least one (e.g., one or more) element(s) selected from Al, B, Ba, Ca, Ce, Cr, Cu, Fe, Mg, Mn, Mo, Nb, Si, Sn, Sr, Ti, V, W, Zn, Y, and Zr, and X may be F, P, S, or a combination thereof.

In one or more embodiments of Chemical Formula 2, $0.8 \leq x2 \leq 0.99$, $0.01 \leq y2 \leq 0.1$, and $0 \leq z2 \leq 0.1$.

**Chemical Formula 3**    $Li_{a3}Ni_{x3}Co_{y3}M^4_{z3}M^5_{w3}O_{2-b3}X_{b3}$

In Chemical Formula 3, $0.9 \leq a3 \leq 1.2$, $0.8 \leq x3 \leq 0.98$, $0.01 \leq y3 \leq 0.19$, $0.01 \leq z3 \leq 0.19$, $0 \leq w3 \leq 0.19$, $0.9 \leq x3+y3+z3+w3 \leq 1.1$, and $0 \leq b3 \leq 0.1$, $M^4$ may be Al, Mn, or a combination thereof, $M^5$ may be at least one (e.g., one or more) element(s) selected from among B, Ba, Ca, Ce, Cr, Cu, Fe, Mg, Mo, Nb, Si, Sn, Sr, Ti, V, W, Zn, Y, and Zr, and X may be F, P, S, or a combination thereof.

In one or more embodiments of Chemical Formula 3, $0.8 \leq x3 \leq 0.95$, $0.01 \leq y3 \leq 0.15$, $0.01 \leq z3 \leq 0.05$, and $0 \leq w3 \leq 0.05$.

The lithium nickel-based composite oxide may include a high concentration of nickel. For example, in the lithium nickel-based composite oxide, the nickel amount (e.g., content) may be greater than or equal to about 80 mol%, and in other examples, greater than or equal to about 81 mol%, greater than or equal to about 82 mol%, greater than or equal to about 83 mol%, greater than or equal to about 84 mol%, or greater than or equal to about 85 mol%, and may be less than or equal to about 100 mol%, less than or equal to about 99 mol%, less than or equal to about 95 mol%, less than or equal to about 90 mol%, less than or equal to about 89 mol%, or less than or equal to about 88 mol%, based on 100 mol% of a total metal excluding lithium.

Because a high-capacity lithium nickel-based composite oxide is in the polycrystalline form of secondary particles in which a plurality of primary particles are agglomerated, the smaller primary particles may provide improved efficiency and output characteristics. However, the smaller primary particles have a larger amount of surface area available to undesired reaction(s) as a reaction area thereof with an electrolyte increases, which may result in stability and cycle-life being deteriorated. In order to address there challenges, one or more example embodiments provide a positive electrode active material having substantially uniform and substantially spherical primary particles.

The substantial uniformity of the primary particles may be provided (secured) by adjusting an average and a standard deviation of sizes the primary particles within each appropriate range.

The average size of the primary particles according to some example embodiments ranges from about 1.05 $\mu$m to about 1.5 $\mu$m. The average size of the primary particles may be, for example, greater than or equal to about 1.05 $\mu$m, greater than or equal to about 1.1 $\mu$m, greater than or equal to about 1.15 $\mu$m, or greater than or equal to about 1.2 $\mu$m and less than or equal to about 1.5 $\mu$m, less than or equal to about 1.45 $\mu$m, less than or equal to about 1.4 $\mu$m, less than or equal to about 1.35 $\mu$m, less than or equal to about 1.3 $\mu$m, or less than or equal to about 1.25 $\mu$m. The sizes of the primary particles may refer to those of primary particles observed in the cross section of one of the secondary particles and may be measured through electron backscatter diffraction (EBSD) of the cross-section of the secondary particle. The sizes of the primary particles may be calculated by measuring an area of each primary particle from the EBSD image of the cross-section of the secondary particle and deriving a circle with an area equal to (the same area as) the measured area, and thus determine a diameter of the derived circle. Herein, the average size of the primary particles may be an arithmetic mean (average) of sizes of about 10 primary particles. A positive electrode active material of primary particles with the average size of about 1.05 $\mu$m to about 1.5 $\mu$m may be prepared by appropriately selecting (controlling) raw materials, such as using a nickel-based composite oxide as the raw material, and also, by selecting (adjusting) the manufacturing conditions, for example, by adopting a manufacturing method according to one or more example embodiments, as described in more detail herein. If (e.g., when) the average size of the primary particles is within the preceding ranges, charge/discharge capacity, efficiency, and cycle-life characteristics may not only be enhanced or improved, but also output characteristics may be increased.

The standard deviation of the sizes of the primary particles according to one or more example embodiments is less than or equal to about 0.3 $\mu$m. The standard deviation of the sizes of the primary particles may be, for example, less than or equal to about 0.25 $\mu$m or less than or equal to about 0.2 $\mu$m. The standard deviation of the sizes of the primary particles may be calculated as a standard deviation for the average value of the sizes of the primary particles obtained through the EBSD image of the cross-section of the secondary particles. A positive electrode active material of primary particles with the standard deviation less than or equal to about 0.3 $\mu$m may be prepared by appropriately selecting (controlling) raw materials, such as using a nickel-based composite oxide during the manufacture of the positive electrode active material. The standard deviation of the primary particle sizes within the range refers to that the primary particle sizes are substantially (very) uniform, which may contribute to increasing output characteristics as well as improving charge/-discharge capacity, efficiency, and cycle-life characteristics of a battery.

The substantially uniform sphericity of the primary particles may be provided (secured) by selecting (controlling) an average aspect ratio of the primary particles within an appropriate range.

According to some example embodiments, the average aspect ratio of the primary particles is less than or equal to about 1.7. The average aspect ratio of the primary particles refers to an average value of aspect ratios in the cross-section of one of the primary particles observed in the cross-section of one secondary particle, which may be measured through an image analysis program in the electron backscatter diffraction (EBSD) analysis of the cross-section of the secondary particle. For example, the secondary particle may be cut with a focused ion beam (FIB) to take an image of its cross-section with electron backscatter diffraction (EBSD), and in the EBSD image of the cross-section, after outlining the primary particles through Image J, an image analysis program, an aspect ratio of the outlined primary particles may be measured through the Image J program. The aspect ratio of the cross-section of one of the primary particles may be measured through one or more suitable image programs, for example, the Image J program. Image J is a software developed by the National Institute of Health in the United States and may be downloaded from the site of https://imagej.net/ImageJ and refer to sites such as https://en.Wikipedia.org/wiki/ImageJ and the like for detailed information.

The aspect ratio of the primary particle may be determined by randomly selecting a primary particle in the EBSD image and drawing two parallel lines so that the particle may have a sandwich shape, wherein the longest distance (major axis, width, long side) between the parallel lines is called "x", and a length perpendicular thereto (minor axis, height, short side) is called "y". Herein, the aspect ratio of the primary particle refers to a ratio of x to y, that is, x/y. In some embodiments, an average aspect ratio of the primary particles may be an average value of the aspect ratios of the primary particles in one secondary particle.

The average aspect ratio of the primary particles is less than or equal to about 1.7, for example, less than or equal to about 1.6, less than or equal to about 1.5, less than or equal to about 1.4, or less than or equal to about 1.3, or greater than or equal to about 1, greater than or equal to about 1.1, greater than or equal to about 1.2, greater than or equal to about 1.3, greater than or equal to about 1.4, or greater than or equal to about 1.5. A positive electrode active material of primary particles with an average aspect ratio of less than or equal to 1.7, which uses a nickel-based composite oxide as a raw material, may be manufactured by appropriately selecting (controlling) the manufacturing conditions of the positive electrode active material, such as removing hinderances caused by evaporating hydrate during the reaction with lithium and thus improving a reaction of the lithium raw material (e.g., LiOH) with water. If (e.g., when) the average aspect ratio of the primary particles satisfies the preceding ranges, sphericity and uniformity may be enhanced or improved, enhancing output characteristics as well as improving charge/discharge capacity, efficiency, and cycle-life characteristics of the battery.

According to one or more example embodiments, in the cross-section of one secondary particle, a ratio of primary particles having an aspect ratio of about 1.2 to about 1.7 may be greater than or equal to about 50% of the number of total primary particles. The ratio of the primary particles with an aspect ratio of about 1.2 to about 1.7 may, for example, be greater than or equal to about 50%, greater than or equal to about 60%, greater than or equal to about 70%, greater than or equal to about 80%, or greater than or equal to about 90%.

In one or more embodiments, the ratio of the primary particles with an aspect ratio of about 1.2 to about 1.7 may be obtained, for example, in the following method. In the EBSD image of the cross-section of the secondary particle cut with FIB, the primary particles are outlined through the Image J program. All the outlined primary particles are measured with respect to aspect ratios to analyze an aspect ratio distribution. The number ratio of the primary particles with an aspect ratio of about 1.2 to about 1.7 may be derived therefrom.

According to one or more example embodiments, a ratio of the number of primary particles having an aspect ratio of greater than or equal to about 4 to the total number of primary particles in the cross-section of one secondary particle may be less than or equal to about 10%. The ratio of the number of primary particles having an aspect ratio of greater than or equal to about 4 may be, for example, less than or equal to about 10%, less than or equal to about 8%, less than or equal to about 6%, less than or equal to about 5%, less than or equal to about 4%, less than or equal to about 2%, or less than or equal to about 1%, and may be greater than or equal to about 0.2%, greater than or equal to about 0.4%, greater than or equal to about 0.6%, or greater than or equal to about 0.8%.

If (e.g., when) the primary particles exhibit the aforementioned aspect ratio distribution, the number of primary particles having a circular shape increases, so that substantially high sphericity of the primary particles may be provided (secured), and accordingly, the positive electrode active material may provide (secure) high capacity, long cycle-life, and high output.

An average particle diameter ($D_{50}$) of the secondary particles may be about 8 $\mu$m to about 20 $\mu$m, about 8 $\mu$m to about 18 $\mu$m, or about 10 $\mu$m to about 15 $\mu$m. Here, the average particle diameter of the secondary particles may be obtained by measuring the size (particle diameter or major axis length) of about 20 secondary particles in the SEM image of the positive electrode active material to obtain a particle size distribution, and taking the size ($D_{50}$) of the secondary particles with a cumulative volume of 50 volume% as the average particle diameter.

**Method of Preparing Positive Electrode Active Material**

In one or more embodiments, a method for preparing a positive electrode active material includes mixing a nickel-based composite oxide and a lithium raw material and performing a heat treatment to obtain the positive electrode active material.

The nickel-based composite oxide may be represented by Chemical Formula 4.

**Chemical Formula 4** $\qquad$ $Ni_{x4}M^6_{y4}M^7_{z4}O_{2-b4}X_{b4}$

In Chemical Formula 4, $0.8 \leq x4 < 1$, $0 < y4 \leq 0.2$, $0 \leq z4 \leq 0.2$, $0.9 \leq x4+y4+z4 \leq 1.1$, and $0 \leq b4 \leq 0.1$, $M^6$ and $M^7$ may each independently be at least one (e.g., one or more) element(s) selected from among Al, B, Ba, Ca, Ce, Co, Cr, Cu, Fe, Mg, Mn, Mo, Nb, Si, Sn, Sr, Ti, V, W, Zn, Y, and Zr, and X may be at least one (e.g., one or more) element(s) selected from among F, P, and S.

In one or more embodiments of Chemical Formula 4, $0.85 \leq x4 < 1$, $0 < y4 \leq 0.15$, and $0 \leq z4 \leq 0.15$.

The nickel-based composite oxide may be represented by Chemical Formula 5 or Chemical Formula 6 as an example.

**Chemical Formula 5**     $Ni_{x5}Co_{y5}M^8{}_{z5}O_{2-b5}X_{b5}$

In Chemical Formula 5, $0.8{\le}x5{<}1$, $0{<}y5{\le}0.2$, $0{\le}z5{\le}0.2$, $0.9{\le}x5{+}y5{+}z5{\le}1.1$, and $0{\le}b5{\le}0.1$, $M^8$ may be at least one (e.g., one or more) element(s) selected from among Al, B, Ba, Ca, Ce, Cr, Cu, Fe, Mg, Mn, Mo, Nb, Si, Sn, Sr, Ti, V, W, Zn, Y, and Zr, and X may be F, P, S or a combination thereof.

In Chemical Formula 5, $0.8{\le}x5{\le}0.99$, $0.01{\le}y5{\le}0.1$, and $0{\le}z5{\le}0.1$.

**Chemical Formula 6**     $Ni_{x6}Co_{y6}M^9{}_{z6}M^{10}{}_{w6}O_{2-b6}X_{b6}$

In Chemical Formula 6, $0.8{\le}x6{\le}0.98$, $0.01{\le}y6{\le}0.19$, $0.01{\le}z6{\le}0.19$, $0{\le}w6{\le}0.19$, $0.9{\le}x6{+}y6{+}z6{+}w6{\le}1.1$, and $0{\le}b6{\le}0.1$, $M^9$ may be Al, Mn, or a combination thereof, $M^{10}$ may be at least one (e.g., one or more) element(s) selected from among B, Ba, Ca, Ce, Cr, Cu, Fe, Mg, Mo, Nb, Si, Sn, Sr, Ti, V, W, Zn, Y, and Zr, and X may be F, P, S or a combination thereof.

In one or more embodiments of Chemical Formula 6, $0.8{\le}x6{\le}0.95$, $0.01{\le}y6{\le}0.15$, $0.01{\le}z6{\le}0.05$, and $0{\le}w6{\le}0.05$.

The nickel-based composite oxide may be a high-concentration nickel-containing oxide. For example, in the nickel-based composite oxide, the nickel amount (e.g., content) may be greater than or equal to about 80 mol%, and in other examples, greater than or equal to about 81 mol%, greater than or equal to about 82 mol%, greater than or equal to about 83 mol%, greater than or equal to about 84 mol%, or greater than or equal to about 85 mol%, and may be less than or equal to about 100 mol%, less than or equal to about 99 mol%, less than or equal to about 95 mol%, less than or equal to about 90 mol%, less than or equal to about 89 mol%, or less than or equal to about 88 mol%, based on 100 mol% of the total metal.

The nickel-based composite oxide may be obtained by purchasing a commercially available product, or may be prepared using a nickel-based composite hydroxide. For example, the nickel-based composite oxide may be prepared by heat-treating a nickel-based composite hydroxide prepared by a coprecipitation method in an oxidizing atmosphere at a temperature of less than or equal to about 500 °C for less than or equal to about 6 hours.

According to one or more example embodiments, a method for preparing a positive electrode active material includes mixing a nickel-based composite oxide with a lithium raw material and heat-treating the same. The method may include performing the heat treatment at a lower temperature than if (e.g., when) mixing a lithium raw material with a conventional nickel-based composite hydroxide and heat-treating the same. The method may include selecting (controlling) the size, standard deviation, aspect ratio, and/or the like of primary particles of the positive electrode active material within the aforementioned range, thereby providing a positive electrode active material capable of providing (securing) high capacity, long cycle-life, and high output.

The lithium raw material may be, for example, $Li_2CO_3$, LiOH, a hydrate thereof, or a combination thereof.

The lithium raw material may be mixed in a ratio of about 0.9 to about 1.2 moles of lithium of the lithium raw material per 1 mole of a total metal of the nickel-based composite oxide. The lithium of the lithium raw material may be mixed in a ratio, for example, of greater than or equal to about 0.9 moles, greater than or equal to about 0.95 moles, greater than or equal to about 1 mole, or greater than or equal to about 1.04 moles, and may be mixed in a ratio of less than or equal to about 1.2 moles, less than or equal to about 1.15 mol, less than or equal to about 1.1 mol, or less than or equal to about 1.06 moles, per 1 mole of the total metal of the nickel-based composite oxide.

In order to prepare polycrystals using nickel-based composite oxides or hydroxides containing nickel at a high concentration, the heat treatment temperature may (should) be increased. However, because structural instability may occur if (e.g., when) the heat treatment temperature is increased, there is a limit to increasing the heat treatment temperature. However, a method for preparing a positive electrode active material according to one or more example embodiments uses a nickel-based composite oxide as a raw material, so that even if (e.g., when) preparing a positive electrode active material containing a high concentration of nickel, the heat treatment temperature may be appropriately selected (controlled), and a positive electrode active material capable of providing (securing) high capacity, long cycle-life, and high output can be prepared.

The heat treatment may be performed within a range of about 600 °C to about 800 °C. The heat treatment may, for example, be performed at greater than or equal to about 650 °C, greater than or equal to about 700 °C, or greater than or equal to about 750 °C, and may be performed at less than or equal to about 790 °C, less than or equal to about 780 °C, or less than or equal to about 770 °C.

In some example embodiments, the heat treatment includes a temperature raising step and a temperature maintaining step. For example, the temperature raising time may be about 1 to about 3 hours, and the temperature maintaining time may be about 6 to about 8 hours. Depending on the case, the temperature raising time and the temperature maintaining time can be appropriately adjusted, and the temperature raising time may be longer than the temperature maintaining time.

**Positive Electrode**

The positive electrode for a rechargeable lithium battery includes a positive electrode current collector and a positive electrode active material layer on the positive electrode current collector. The positive electrode active material layer includes the positive electrode active material, and may further include a binder, a conductive material, or a combination thereof.

The binder serves to couple the positive electrode active material particles well to each other and also to couple the positive electrode active material well to the current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and/or nylon, but are not limited thereto.

In the positive electrode active material layer, an amount of the binder may be about 1 wt% to about 5 wt% based on 100 wt% of the positive electrode active material layer.

The conductive material is included to provide electrode conductivity and any electrically conductive material may be used as a conductive material unless it causes a chemical change. Examples of the conductive material may include a carbon-based material such as natural graphite, artificial graphite, carbon black, acetylene black, Ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; or a mixture thereof.

In the positive electrode active material layer, an amount of the conductive material may be about 1 wt% to about 5 wt% based on 100 wt% of the positive electrode active material layer.

The positive electrode current collector may include an aluminium foil, but is not limited thereto.

**Rechargeable Lithium Battery**

One or more example embodiments provide a rechargeable lithium battery including a positive electrode, a negative electrode, and an electrolyte.

The rechargeable lithium battery includes a positive electrode including the positive electrode active material and a negative electrode, thereby providing a rechargeable lithium battery capable of providing (securing) high capacity, long cycle-life, and high output.

The rechargeable lithium battery may be, for example, a rechargeable lithium battery including a positive electrode, a negative electrode, a separator between the positive electrode and the negative electrode, and an electrolyte, wherein the electrolyte may be in the form of a liquid or a gel polymer, and/or the like. In one or more embodiments, the rechargeable lithium battery may be an all-solid-state battery including a positive electrode, a negative electrode, and a solid electrolyte, or may be a semi-solid-state battery including a positive electrode, a negative electrode, and a semi-solid electrolyte. The semi-solid may refer to a state that includes both (e.g., simultaneously) solid components and liquid components, or a state that is mostly solid but includes some liquid components. The all-solid-state battery and semi-solid-state battery may exclude (not include) a separator. The positive electrode active material according to some example embodiments may provide (realize) high capacity due to its shape while providing (realizing) substantially (very) high charge/discharge efficiency and high temperature cycle-life, and is therefore suitable for application to the herein-mentioned types (kinds) of batteries and may exhibit suitable or excellent performance in each type (kind) of battery.

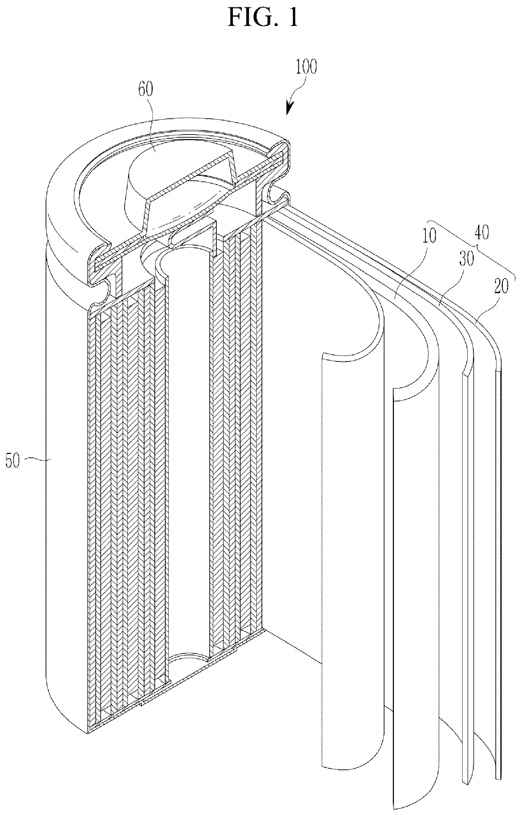

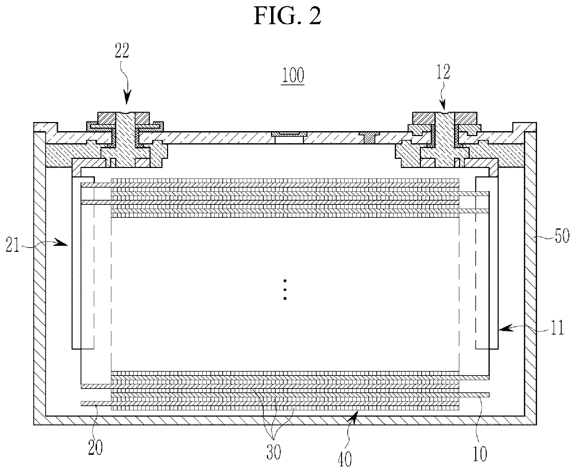

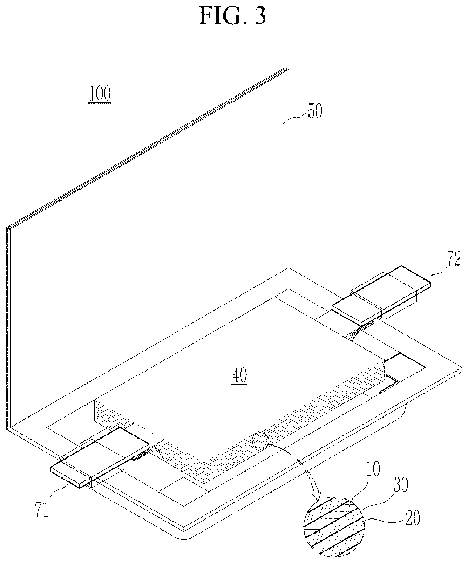

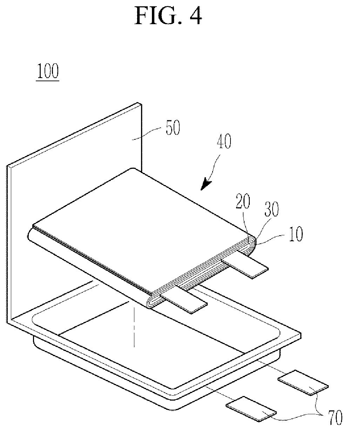

The rechargeable lithium battery may be classified into cylindrical, square, pouch, and coin types (kinds) depending on its shape. FIGS. 1 to 4 are schematic view illustrating rechargeable lithium batteries according to some example embodiments where FIG. 1 is a cylindrical battery, FIG. 2 is a prismatic battery, and FIGS. 3 and 4 are each a pouch-shaped battery. Referring to FIGS. 1 to 4, a rechargeable lithium battery 100 may include an electrode assembly 40 with a separator 30 between a positive electrode 10 and a negative electrode 20, and a case 50 in which the electrode assembly 40 is housed. The positive electrode 10, the negative electrode 20, and the separator 30 may be impregnated with an electrolyte (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes electrode tabs 70, that may be a positive electrode tab 71 and a negative electrode tab 72 serving as an electrical path for inducing the current formed in the electrode assembly 40 to the outside.

**Negative Electrode**

The negative electrode for a rechargeable lithium battery includes a negative electrode current collector, and a negative electrode active material layer on the negative electrode current collector. The negative electrode active material layer includes a negative electrode active material, and may further include a binder, a conductive material, or a combination thereof.

The negative electrode active material includes a material capable of reversibly intercalating/deintercalating lithium ions, lithium metal, an alloy of lithium metal, a material capable of doping and dedoping lithium, or a transition metal oxide.

The material capable of reversibly intercalating/deintercalating the lithium ions may be a carbon-based negative electrode active material.

The carbon-based negative electrode active material may include crystalline carbon, amorphous carbon, or a combination thereof. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and/or the like. The soft carbon refers to a carbon material that can be graphitized, and is a material that is easily graphitized by heat treatment at a high temperature, for example, about 2800 °C. The hard carbon is a carbon material that may not be graphitized or is finely graphitized by heat treatment.

The negative electrode active material layer may further include other types (kinds) of negative electrode active materials in addition to the carbon-based negative electrode active material, and may further include, for example, a lithium metal, an alloy of lithium metal, and a material capable of doping and dedoping lithium.

The lithium metal alloy may include an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ ($0 < x \leq 2$), a Si-Q alloy (wherein Q is selected from an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, $SnO_2$, $SnO_x$ ($0 < x < 2$), a Sn-based alloy, or a combination thereof.

The silicon-carbon composite may be a composite of silicon and amorphous carbon. According to some example embodiments, the silicon-carbon composite may be in the form of silicon particles and amorphous carbon coated on the surface of the silicon particles. For example, it may include a secondary particle (core) assembled with silicon primary particles and an amorphous carbon coating layer (shell) on the surface of the secondary particle. The amorphous carbon may also be present between the silicon primary particles, so that, for example, the silicon primary particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core.

The Si-based negative electrode active material or Sn-based negative electrode active material may be mixed with the carbon-based negative electrode active material. A mixing ratio of the Si-based negative electrode active material or Sn-based negative electrode active material and the carbon-based negative electrode active material may be about 1:99 to about 90:10 by weight.

In the negative electrode active material layer, the negative electrode active material may be included in an amount of about 95 wt% to about 99 wt% based on a total weight of the negative electrode active material layer.

In some example embodiments, the negative electrode active material layer may optionally further include a binder, a conductive material, or a combination thereof.

The binder serves to well adhere the negative electrode active material particles to each other and also to adhere the negative electrode active material to the negative electrode current collector. The binder may be a water-insoluble binder, a water-soluble binder, or a combination thereof.

The water-insoluble binder may include polyvinylchloride, carboxylated polyvinylchloride, polyvinylfluoride, an ethylene oxide-containing polymer, ethylene propylene copolymer, polystyrene, polyvinylpyrrolidone, polyurethane, polytetrafluoroethylene, polyvinylidene fluoride, polyethylene, polypropylene, polyamideimide, polyimide, or a combination thereof.

The water-soluble binder may include a rubber-based binder or a polymer resin binder. The rubber-based binder may be selected from a styrene-butadiene rubber, an acrylated styrene-butadiene rubber, an acrylonitrile-butadiene rubber, an acrylic rubber, a butyl rubber, a fluororubber, and/or a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinyl pyridine, chlorosulfonated polyethylene, latex, a polyester resin, an acrylic resin, a phenol resin, an epoxy resin, polyvinyl alcohol, and/or a combination thereof.

If (e.g., when) a water-soluble binder is used as the binder in the negative electrode active material layer, a cellulose-based compound may be further included capable of imparting viscosity. As the cellulose-based compound, one or more types (kinds), such as carboxymethyl cellulose, hydroxypropyl methyl cellulose, methyl cellulose, or alkali metal salts thereof, may be mixed and used. The alkali metal may be Na, K, and/or Li.

The conductive material may be included to provide electrode conductivity and any electrically conductive material may be used as a conductive material unless it causes a chemical change. Examples of the conductive material may include a carbon-based material such as natural graphite, artificial graphite, carbon black, acetylene black, Ketjen black, a carbon fiber, and a carbon nanotube; a metal-based material in the form of a metal powder or a metal fiber, including copper, nickel, aluminium, and silver; a conductive polymer such as a polyphenylene derivative; or a mixture thereof.

An amount of the binder in the negative electrode active material layer may be 1 wt% to 5 wt% based on 100 wt% of the negative electrode active material layer, and an amount of the conductive material in the negative electrode active material layer may be 1 wt% to 5 wt% based on 100 wt% of the negative electrode active material layer.

The negative electrode current collector may be selected from copper foil, nickel foil, stainless steel foil, titanium foil, nickel foam, copper foam, a polymer substrate coated with a conductive metal, and/or a combination thereof.

**Electrolyte**

In one or more embodiments, the electrolyte for a rechargeable lithium battery may be an electrolyte solution, which includes a non-aqueous organic solvent and a lithium salt.

The non-aqueous organic solvent serves as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In some embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, or an ether group, and the like); amides such as dimethylformamide; dioxolanes such as 1,3-dioxolane, 1,4-dioxolane, and the like; sulfolanes, and/or the like.

The non-aqueous organic solvent can be used alone or in a mixture of two or more types (kinds).

If (e.g., when) using the carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the non-aqueous organic solvent supplies lithium ions in a battery, enables a basic operation of a rechargeable lithium battery, and improves transportation of the lithium ions between positive and negative electrodes. Examples of the lithium salt may include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_3)_2$, $Li(FSO_2)_2N$ (lithium bis(fluorosulfonyl) imide; LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

**Separator**

Depending on the type (kind) of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one or both (e.g., opposite) surfaces of the porous substrate.

The porous substrate may be a polymer film formed of any one polymer selected from among polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (for example, TEFLON®), or a copolymer or mixture of two or more thereof.

The organic material may include a polyvinylidene fluoride-based polymer or a (meth)acrylic polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or $\pm$ 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

Examples and comparative examples of the present disclosure are described herein. However, the following examples are only examples of the present disclosure, and the present disclosure is not limited to the following examples.

**EXAMPLES**

**Example**

**(1) Preparation of Positive Electrode Active Material**

100 moles of $Ni_{0.88}Co_{0.105}Al_{0.015}O_2$ as a nickel-based composite oxide was mixed with 100 parts by mole of LiOH and then, heat-treated at 750 °C for 8 hours by increasing the temperature to 750 degrees Celsius per minute (°C/min) for 2 hours under an oxygen atmosphere, obtaining a lithium nickel-based composite oxide ($LiNi_{0.88}Co_{0.105}Al_{0.015}O_2$), a final positive electrode active material.

The lithium nickel-based composite oxide was in the form of secondary particles in which a plurality of primary particles are agglomerated, wherein the primary particles had an average size of about 1.24 micrometer ($\mu$m) and a standard deviation of about 0.17 $\mu$m, which was measured through electron backscatter diffraction (EBSD) analysis of the cross-sections of the secondary particles, and the secondary particles had an average particle diameter ($D_{50}$) of 13 $\mu$m, which was measured through scanning electron microscopy (SEM) images.

**(2) Manufacturing of Positive Electrode**

The obtained positive electrode active material, polyvinylidene fluoride as a binder, and carbon nanotube as a conductive material were mixed in a weight ratio of 97.7:1.0:1.3 to prepare a positive electrode active material composition. This was dispersed in an N-methylpyrrolidone solvent to prepare a slurry for forming a positive electrode active material layer. The slurry for forming a positive electrode active material layer was coated on an aluminium foil to form an electrode plate, which was dried at 135 °C for 3 hours and then, compressed and vacuum-dried to manufacture a positive electrode.

**(3) Manufacturing of Rechargeable Lithium Battery Cell**

The positive electrode was used with a lithium metal counter electrode as a negative electrode to manufacture a coin half-cell. Between the positive electrode and the lithium metal counter electrode, a separator formed of a porous polyethylene film (a thickness: about 16 $\mu$m) was arranged, and an electrolyte was injected thereinto. The electrolyte was prepared by mixing ethylene carbonate (EC) and ethylmethyl carbonate (EMC) in a volume ratio of 3:5 to prepare a mixed solvent and dissolving 1.1 molarity (M) $LiPF_6$ therein.

**Comparative Example**

**(1) Preparation of Positive Electrode Active Material**

100 moles of $Ni_{0.88}Co_{0.105}Al_{0.015}(OH)_2$ as a nickel-based composite hydroxide was mixed with 100 parts by mole of LiOH and then, heat-treated at 750 °C for 8 hours by increasing a temperature to 750 °C/min under an oxygen atmosphere for 2 hours, obtaining a lithium nickel-based composite oxide ($LiNi_{0.88}Co_{0.105}Al_{0.015}O_2$), a final positive

electrode active material.

The lithium nickel-based composite oxide was in the form of secondary particles in which a plurality of primary particles are agglomerated, wherein the primary particles had an average size of about 1.01 $\mu$m and a standard deviation of about 0.14 $\mu$m, which were measured through EBSD analysis of the cross-sections of the secondary particles, and the secondary particles had an average particle diameter ($D_{50}$) of 13 $\mu$m, which was measured through SEM images.

## (2) Manufacturing of Positive Electrode and Rechargeable Lithium Battery Cell

A positive electrode and a rechargeable lithium battery cell were manufactured substantially in the same manner as in the example.

## Evaluation Example 1. Analysis of Cross-section of Positive Electrode Active Material

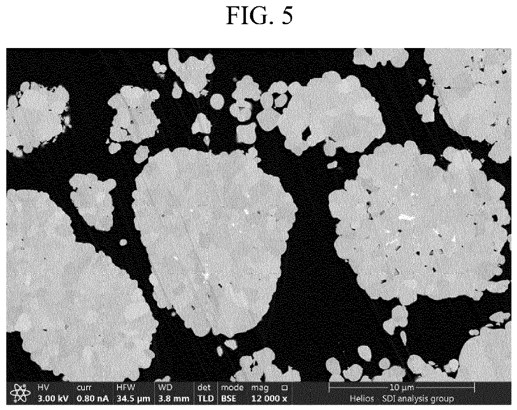

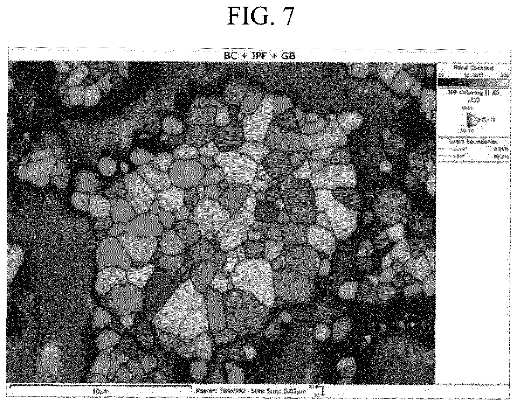

FIG. 5 is a scanning electron microscope (SEM) image of a cross-section of the positive electrode active material prepared in the Example cut by focused ion beam (FIB), and FIG. 7 is an electron backscatter diffraction (EBSD) image of the primary particles outlined in FIG. 5.

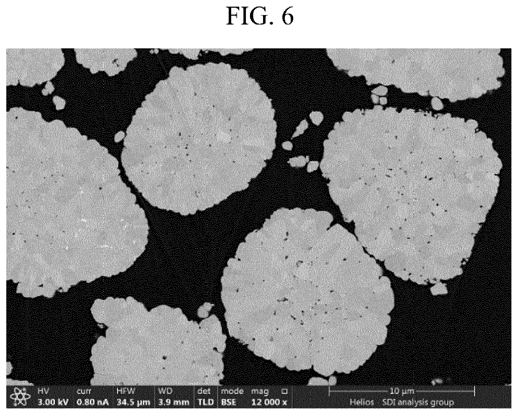

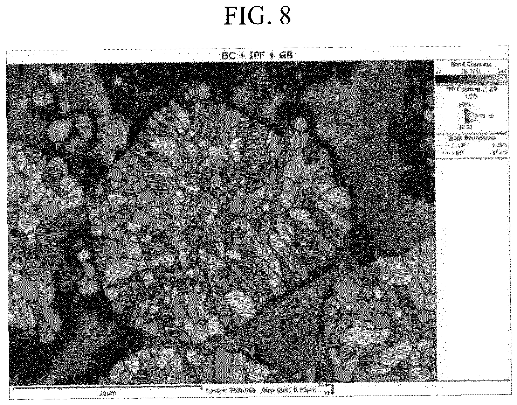

FIG. 6 is a scanning electron microscope (SEM) image of a cross-section of the positive electrode active material prepared in the Comparative Example cut by FIB, and FIG. 8 is an electron backscatter diffraction (EBSD) image of the primary particles outlined in FIG. 6.

Referring to FIGS. 7 and 8, the primary particles of the positive electrode active material according to the Example, compared with those of the positive electrode active material according to the Comparative Example, were not only relatively larger and relatively more uniform but also, had an aspect ratio closer to 1, which confirmed a spherical shape.

Herein, both (e.g., simultaneously) the secondary particles of the positive electrode active material of the Example and the secondary particles of the positive electrode active material of the Comparative Example had an average particle diameter of about 13 $\mu$m.

## Evaluation Example 2. Evaluation of Average and Standard Deviation of Size of Primary Particles

The positive electrode active materials of the Example and the Comparative Example were characterized with electron backscatter diffraction (EBSD) images of their cross-sections, from which ten points were randomly taken, and primary particle sizes at the ten points were measured with respect to sizes by using an image analysis program (Image J). The primary particle sizes at the 10 points were used to calculate an average value and a standard deviation. The results are shown in Table 1, wherein the numbers of 1 to 10 in Column 1 represent any 10 points taken in each of the electron backscatter diffraction (EBSD) images of the cross-sections of the positive electrode active materials according to the Example and the Comparative Example.

Table 1

|  | Average size of primary particles ($\mu$m) | |
|---|---|---|
|  | Example | Comparative Example |
| 1 | 1 | 1.2 |
| 2 | 1.2 | 1 |
| 3 | 1.3 | 1 |
| 4 | 1.2 | 1 |
| 5 | 1.3 | 0.8 |
| 6 | 1.5 | 0.8 |
| 7 | 1.5 | 1 |
| 8 | 1.2 | 1 |
| 9 | 1 | 1.2 |
| 10 | 1.2 | 1.1 |
| Average | 1.24 | 1.01 |
| Standard deviation | 0.17 | 0.14 |

**Evaluation Example 3. Aspect Ratio Analysis of Primary Particles**

When the primary particles of the Example and the Comparative Example were also analyzed with respect to an aspect ratio distribution through the image analysis program (Image J) by using the images of FIGS. 7 and 8, the primary particles of the Example had an average aspect ratio of 1.58, while the primary particles of the Comparative Example had an average aspect ratio of 1.82. Referring to FIGS. 7 and 8, the primary particles of the Example were confirmed to be more spherical and uniform than those of the Comparative Example, but the primary particles of the Comparative Example were relatively radially arranged.

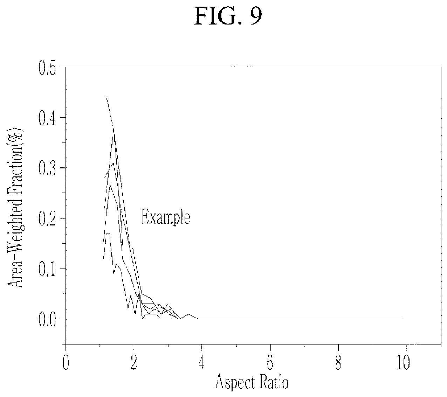

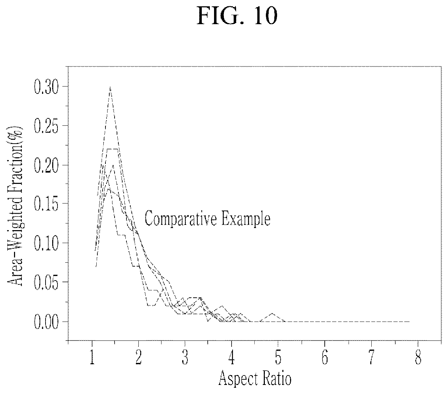

FIGS. 9 and 10 show the aspect ratio distributions of the primary particles in the cross-section of the positive electrode active materials prepared in the Example and the Comparative Example, respectively. In FIGS. 9 and 10, a horizontal axis is an aspect ratio of the primary particles, and a vertical axis represents the cumulative number ratio of the primary particles having the aspect ratio corresponding to the horizontal axis.

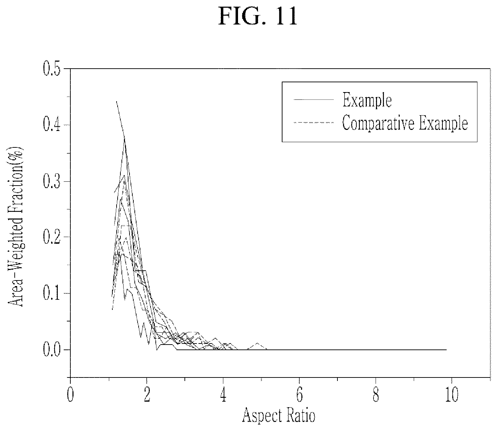

Referring to FIGS. 9 and 10, in the cross-section of the positive electrode active material of the Example, the primary particles mostly had an aspect ratio of less than 4, but in the cross-section of the positive electrode active material of the Comparative Example, some primary particles had an aspect ratio of greater than or equal to 4. In some embodiments, referring to FIG. 11, in the cross-section of the positive electrode active material of the Example, an aspect ratio graph of the primary particles was shifted to the left, compared with that of the positive electrode active material of the Comparative Example, which confirmed that the Example had the primary particles with an aspect ratio of 1 to 2 at a high cumulative number ratio.

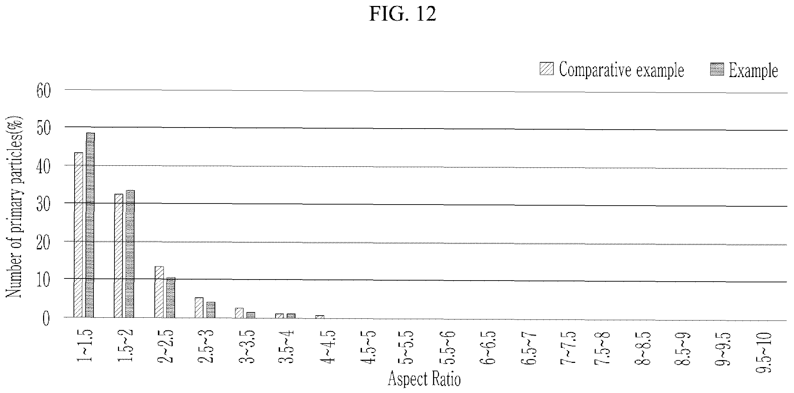

FIG. 12 is a graph obtained by analyzing the aspect ratio distribution curves of the primary particles of FIG. 9 and showing the number of the primary particles within the aspect ratio range of the x-axis as a bar graph by analyzing the aspect ratios of the primary particles within the secondary particles of each of the cross-sections of the positive electrode active materials of the Example and the Comparative Example. The data according to FIG. 12 are shown in Table 2.

Table 2

| Aspect ratio | Number of primary particles (%) | |
|---|---|---|
| | Example | Comparative Example |
| 1 to 1.5 | 48.6 | 43.25 |
| 1.5 to 2 | 33.5 | 32.44 |
| 2 to 2.5 | 10.57 | 13.66 |
| 2.5 to 3 | 4.04 | 5.37 |
| 3 to 3.5 | 1.49 | 2.65 |
| 3.5 to 4 | 0.99 | 1.12 |
| 4 to 4.5 | 0 | 0.67 |
| 4.5 to 5 | 0.12 | 0.45 |
| 5 to 5.5 | 0.19 | 0.08 |
| 5.5 to 6 | 0.19 | 0.11 |
| 6 to 6.5 | 0.06 | 0.11 |
| 6.5 to 7 | 0 | 0.03 |
| 7 to 7.5 | 0.06 | 0.03 |
| 7.5 to 8 | 0.12 | 0.03 |
| 8 to 8.5 | 0 | 0 |
| 8.5 to 9 | 0 | 0 |
| 9 to 9.5 | 0 | 0 |
| 9.5 to 10 | 0.06 | 0 |

Referring to FIG. 12 and Table 2, in the cross-section of the positive electrode active material of the Example, the number of primary particles having an aspect ratio of greater than or equal to about 4 was confirmed to have a ratio of 0.8%. On the contrary, because the number of primary particles having an aspect ratio of greater than or equal to about 4 was confirmed to have a ratio of 1.51% in the cross-section of the positive electrode active material of the Comparative Example, the primary particles of the positive electrode active material of the Example were confirmed to have suitable or excellent uniformity, compared with those of the positive electrode active material of the Comparative Example.

**Evaluation Example 4. High-rate Capability Evaluation**

The rechargeable lithium battery cells of the Example and the Comparative Example were charged at a constant current/constant voltage under conditions of 1 C, 4.25 V, and 0.05 C cut-off, paused for 10 minutes, discharged at the constant current/constant voltage under conditions of 1 C and 3 V cut-off, and paused for 10 minutes at 25 °C for initial charge and discharge. Subsequently, the cells were repetitively charged and discharged by changing the C-rate to 2 C, 3 C, 4 C, 5 C, and 1 C.

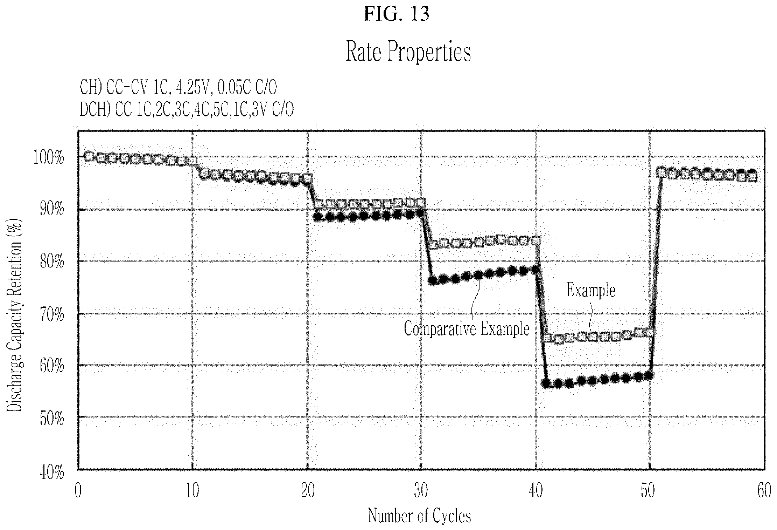

A discharge capacity graph at each cycle is shown in FIG. 13, from which a ratio of discharge capacity at each C-rate cycle to that at initial 1 C cycle was calculated, and the results are shown in Table 3.

Table 3

|  | 1.0 C | 2.0 C | 3.0 C | 4.0 C | 5.0 C | 1.0 C (Restored) |
|---|---|---|---|---|---|---|
| Example | 100% | 96.9% | 91.0% | 83.2% | 65.2% | 97.0% |
| Comparative Example | 100% | 96.5% | 88.5% | 76.1% | 56.3% | 97.3% |

Referring to FIG. 13, the rechargeable lithium battery cell of the Example exhibited improved or better discharge capacity retention at all C-rates and, particularly, at high rates of 4 C and 5 C than the rechargeable lithium battery cell of the Comparative Example and also, an excellent discharge capacity retention rate even at the last 1 C, which confirmed an excellent or suitable capacity recovery rate.

Summary

The positive electrode active material of the Example, which was manufactured by mixing a nickel-based composite oxide starting material with a lithium raw material and heat-treating the mixture, had the same average particle diameter of secondary particles as that of the Comparative Example, which was manufactured by mixing the nickel-based composite hydroxide starting material with the lithium raw material and heat-treating the mixture. An unexpected beneficial result provided by the difference in starting materials was that the primary particles of the Example had a relatively larger average size than those of the Comparative Example but a small standard deviation of less than equal to 0.3 $\mu$m and an average aspect ratio of less than or equal to 1.7. These results confirmed that the primary particles of the Example were relatively uniform and spherical.

On the contrary, the manufacturing process of the Comparative Example was confirmed to provide primary particles having a relatively large aspect ratio and being more radially distributed.

In some embodiments, the Example, in which the primary particles were relatively large, relatively uniform, and spherical, exhibited suitable or excellent discharge capacity retention and capacity recovery rate when compared to the Comparative Example, in which the primary particles were relatively smaller, and had an ununiform (e.g., substantially non-uniform) aspect ratio and a more radially aligned distribution.

Accordingly, a positive electrode active material having relatively large, uniform, and spherical primary particles according to the Example of the present disclosure exhibited suitable or excellent battery performance, compared with a positive electrode active material of the Comparative Example.

A person of ordinary skill in the art, in view of the present disclosure in its entirety, would appreciate that each suitable feature of the embodiments of the present disclosure may be combined or combined with each other, partially or entirely, and may be technically interlocked and operated in one or more suitable ways, and each embodiment may be implemented independently of each other or in conjunction with each other in any suitable manner unless otherwise stated or implied.

While this disclosure has been described in connection with what is presently considered to be practical example embodiments, it is to be understood that the invention is not limited to the disclosed embodiments. On the contrary, it is intended to cover one or more suitable modifications and equivalent arrangements included within the scope of the appended claims and equivalents thereof.

**Description of Symbols**

| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

**Claims**

1. A positive electrode active material comprising secondary particles comprising a lithium nickel-based composite oxide, the secondary particles having a form in which a plurality of primary particles are agglomerated,

   wherein an average size of the primary particles is measured through electron backscatter diffraction (EBSD) analysis of a cross-section of the secondary particles, the average size being about 1.05 μm to about 1.5 μm, a standard deviation of the average size is less than or equal to about 0.3 μm, and an average aspect ratio of the primary particles is less than or equal to about 1.7.

2. The positive electrode active material as claimed in claim 1, wherein the lithium nickel-based composite oxide is represented by Chemical Formula 1:

   Chemical Formula 1 $\quad Li_{a1}Ni_{x1}M^1_{y1}M^2_{z1}O_{2-b1}X_{b1}$

   wherein, in Chemical Formula 1,

   $$0.9 \leq a1 \leq 1.2,$$

   $$0.8 \leq x1 < 1,$$

   $$0 < y1 \leq 0.2,$$

   $$0 \leq z1 \leq 0.2,$$

   $$0.9 \leq x1 + y1 + z1 \leq 1.1,$$

   $$0 \leq b1 \leq 0.1,$$

   $M^1$ and $M^2$ are each independently at least one element selected from among Al, B, Ba, Ca, Ce, Co, Cr, Cu, Fe, Mg, Mn, Mo, Nb, Si, Sn, Sr, Ti, V, W, Zn, Y, and Zr, and
   X is at least one element selected from among F, P, and S.

3. The positive electrode active material as claimed in claim 1 or claim 2, wherein a nickel amount is greater than or equal to about 80 mol% based on 100 mol% of a total metal excluding lithium in the lithium nickel-based composite oxide.

4. The positive electrode active material as claimed in any one of claims 1 to 3, wherein:

(i) a ratio of a number of primary particles having an aspect ratio of about 1.2 to about 1.7 to a total number of primary particles in a cross-section of one secondary particle is greater than or equal to about 50%; and/or
(ii) a ratio of a number of primary particles having an aspect ratio of greater than or equal to about 4 to a total number of primary particles in a cross-section of one secondary particle is less than or equal to about 10%.

5. The positive electrode active material as claimed in any one of claims 1 to 4, wherein
an average particle diameter ($D_{50}$) of the secondary particles is about 8 $\mu$m to about 20 $\mu$m.

6. A method for preparing a positive electrode active material, comprising mixing a nickel-based composite oxide and a lithium raw material; and
performing a heat treatment to obtain the positive electrode active material as claimed in any one of claims 1 to 5.

7. The method as claimed in claim 6, wherein
the nickel-based composite oxide is represented by Chemical Formula 4:

**Chemical Formula 4** $\quad Ni_{x4}M6_{y4}M7_{z4}O_{2-b4}X_{b4}$

wherein, in Chemical Formula 4,

$$0.8 \leq x4 < 1,$$

$$0 < y4 \leq 0.2,$$

$$0 \leq z4 \leq 0.2,$$

$$0.9 \leq x4 + y4 + z4 \leq 1.1,$$

$$0 \leq b4 \leq 0.1,$$

$M6$ and $M7$ are each independently are each independently at least one element selected from among Al, B, Ba, Ca, Ce, Co, Cr, Cu, Fe, Mg, Mn, Mo, Nb, Si, Sn, Sr, Ti, V, W, Zn, Y, and Zr, and
X is at least one element selected from among F, P, and S.

8. The method as claimed in claim 6 or claim 7, wherein:

(i) a nickel amount in the nickel-based composite oxide is greater than or equal to about 80 mol% based on 100 mol% of a total metal; and/or
(ii) the mixing of the nickel-based composite oxide and the lithium raw material comprises providing a ratio of lithium of the lithium raw material of about 0.9 moles to about 1.2 moles per mole of a total metal of the nickel-based composite oxide.

9. The method as claimed in any one of claims 6 to 8, wherein
the performing of the heat treatment comprises a temperature of about 600 °C to about 800 °C.

10. A positive electrode comprising

a positive electrode current collector, and a positive electrode active material layer on the positive electrode current collector,
wherein the positive electrode active material layer comprises the positive electrode active material as claimed in any one of claims 1 to 5.

11. A rechargeable lithium battery comprising the positive electrode as claimed in claim 10, a negative electrode, and an electrolyte.

12. A positive electrode comprising

a positive electrode current collector, and a positive electrode active material layer on the positive electrode current collector,

wherein the positive electrode active material layer comprises a positive electrode active material prepared by the method as claimed in any one of claims 6 to 9.

13. A positive electrode comprising:

a positive electrode current collector; and

a positive electrode active material layer on the positive electrode current collector and comprising a positive electrode active material comprising secondary particles comprising a lithium nickel-based composite oxide, the secondary particles having a form in which a plurality of primary particles are agglomerated,

wherein an average size of the primary particles is measured through electron backscatter diffraction (EBSD) analysis of a cross-section of the secondary particles, the average size being about 1.05 $\mu$m to about 1.5 $\mu$m, a standard deviation of the average size is less than or equal to about 0.3 $\mu$m, and

an average aspect ratio of the primary particles is less than or equal to about 1.7.

14. The positive electrode as claimed in claim 13, wherein

the lithium nickel-based composite oxide is represented by Chemical Formula 1:

**Chemical Formula 1** $\qquad Li_{a1}Ni_{x1}M^1{}_{y1}M^2{}_{z1}O_{2-b1}X_{b1}$

wherein, in Chemical Formula 1,

$$0.9 \leq a1 \leq 1.2,$$

$$0.8 \leq x1 < 1,$$

$$0 < y1 \leq 0.2,$$

$$0 \leq z1 \leq 0.2,$$

$$0.9 \leq x1 + y1 + z1 \leq 1.1,$$

$$0 \leq b1 \leq 0.1,$$

$M^1$ and $M^2$ are each independently at least one element selected from among Al, B, Ba, Ca, Ce, Co, Cr, Cu, Fe, Mg, Mn, Mo, Nb, Si, Sn, Sr, Ti, V, W, Zn, Y, and Zr, and

X is at least one element selected from among F, P, and S.

15. The positive electrode as claimed in claim 13 or claim 14, wherein:

(i) a nickel amount is greater than or equal to about 80 mol% based on 100 mol% of a total metal excluding lithium in the lithium nickel-based composite oxide; and/or

(ii) a ratio of a number of primary particles having an aspect ratio of about 1.2 to about 1.7 to a total number of primary particles in a cross-section of one secondary particle is greater than or equal to about 50%; and/or

(iii) a ratio of a number of primary particles having an aspect ratio of greater than or equal to about 4 to a total number of primary particles in a cross-section of one secondary particle is less than or equal to about 10%; and/or

(iv) an average particle diameter ($D_{50}$) of the secondary particles is about 8 $\mu$m to about 20 $\mu$m.

# FIG. 1

# FIG. 2

FIG. 3

FIG. 4

FIG. 5

FIG. 6

## FIG. 7

FIG. 8

## FIG. 9

FIG. 10

FIG. 11

FIG. 12

EP 4 733 266 A1

**FIG. 13**

Rate Properties

CH) CC-CV 1C, 4.25V, 0.05C C/O
DCH) CC 1C,2C,3C,4C,5C,1C,3V C/O

EP 4 733 266 A1

**EUROPEAN SEARCH REPORT**

Application Number

EP 25 19 4894

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 023 603 A1 (SUMITOMO METAL MINING CO [JP]) 6 July 2022 (2022-07-06) * example 1 * ----- | 1-15 | INV. C01G53/506 H01M4/525 H01M10/0525 |
| X | KR 102 362 778 B1 (SAMSUNG SDI CO LTD [KR]) 11 February 2022 (2022-02-11) * examples * ----- | 1-15 | |

TECHNICAL FIELDS
SEARCHED (IPC)

C01G

The present search report has been drawn up for all claims

| Place of search | Date of completion of the search | Examiner |
|---|---|---|
| Munich | 11 March 2026 | Besana, Sonia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 733 266 A1**

## ANNEX TO THE EUROPEAN SEARCH REPORT
## ON EUROPEAN PATENT APPLICATION NO.

EP 25 19 4894

11-03-2026

| Patent document cited in search report | | Publication date | Patent family member(s) | | Publication date |
|---|---|---|---|---|---|
| EP 4023603 | A1 | 06-07-2022 | CN | 114342119 A | 12-04-2022 |
| | | | CN | 114342121 A | 12-04-2022 |
| | | | CN | 114342122 A | 12-04-2022 |
| | | | EP | 4023603 A1 | 06-07-2022 |
| | | | EP | 4023604 A1 | 06-07-2022 |
| | | | EP | 4023605 A1 | 06-07-2022 |
| | | | JP | 7677148 B2 | 15-05-2025 |
| | | | JP | 7677149 B2 | 15-05-2025 |
| | | | JP | 7677150 B2 | 15-05-2025 |
| | | | JP | WO2021040031 A1 | 04-03-2021 |
| | | | JP | WO2021040032 A1 | 04-03-2021 |
| | | | JP | WO2021040033 A1 | 04-03-2021 |
| | | | KR | 20220054804 A | 03-05-2022 |
| | | | KR | 20220057538 A | 09-05-2022 |
| | | | KR | 20220057539 A | 09-05-2022 |
| | | | US | 2022285676 A1 | 08-09-2022 |
| | | | US | 2022285679 A1 | 08-09-2022 |
| | | | US | 2022293933 A1 | 15-09-2022 |
| | | | WO | 2021040031 A1 | 04-03-2021 |
| | | | WO | 2021040032 A1 | 04-03-2021 |
| | | | WO | 2021040033 A1 | 04-03-2021 |
| KR 102362778 | B1 | 11-02-2022 | KR | 20210067548 A | 08-06-2021 |
| | | | US | 2021167379 A1 | 03-06-2021 |

EPO FORM P0459